# EUROPEAN PATENT APPLICATION

(11) **EP 4 393 928 A1**
(43) Date of publication of application: **03.07.2024**
(21) Application number: 22937779.1
(22) Date of filing: 19.04.2022
(51) Int. Cl.: C07F 9/30

(54) **HYBRIDIZED DIALKYL PHOSPHINATE SALT, METHOD FOR PREPARING SAME, AND USE THEREOF**

(71) Applicant: Ningbo Institute of Materials Technology & Engineering, Chinese Academy of Sciences, Ningbo, Zhejiang 315201 (CN); Zhejiang Wansheng Co., Ltd, Taizhou, Zhejiang 317000 (CN)
(72) Inventor: YAO, Qiang, Ningbo, Zhejiang 315201 (CN); ZHAO, Yueying, Ningbo, Zhejiang 315201 (CN); CAO, Weihong, Ningbo, Zhejiang 315201 (CN); TANG, Tianbo, Ningbo, Zhejiang 315201 (CN)
(74) Representative: karo IP
(86) International application number: PCT/CN2022/087756
(87) International publication number: WO 2023/201541

(57) **Abstract**

Disclosed are a hybrid dialkylphosphinate salt, a method for preparing same, and use thereof. The hybrid dialkylphosphinate salt is selected from at least one of the compounds represented by Formula (I). The hybrid dialkylphosphinate salt of Formula (I) provided herein features a low required loading level, high flame retardant efficiency for various polymers, and good thermal stability. The present invention overcomes the disadvantage of low flame retardant efficiency of diethylphosphinate in polymers as well as low thermal stability and large dust of dipropylphosphinate. The hybrid dialkylphosphinate salt of Formula (I) can be widely applied to flame retardant polymers which require high-temperature processing.

## Description

### TECHNICAL FIELD

The present disclosure relates to a hybrid dialkylphosphinate salt, a method for preparing same, and use thereof, and belongs to the field of preparation of flame retardant polymers.

### BACKGROUND

Dialkylphosphinates, especially aluminum diethylphosphinate, have been widely used as halogen-free flame retardants for polymeric materials. Dialkylphosphinate flame retardant products have a low density and desirable mechanical properties with a relatively low loading of dialkylphosphinates. However, as flame retardants, the existing dialkylphosphinates have limited flame retardant efficiency. For example, poly(metal dialkylphosphinate)s can be used as a flame retardant for glass fiber-free nylons, but they have low flame retardant efficiency and exhibit a large adverse effect on the physical properties of flame retardant polymeric materials. There are also reports on the use of aluminum dipropylphosphinate as a flame retardant for nylons. Aluminum dipropylphosphinate has high flame retardant efficiency, but low thermal stability. It begins to degrade and volatilize substantially at 300 °C , which is detrimental to engineering plastics such as nylon 66 that require high-temperature processing.

Moreover, when the dialkylphosphinate is used as a flame retardant, besides the flame retardant properties, the flame retardant is desired to have a large particle size and a large density to reduce filtration time and dust during its preparation and use. Also when mixed with polymers, there will be no significant difference in free-flow velocity in a charging drum which can be caused by a large difference in density leading to a poor distribution of the flame retardant in flame retardant materials.

Therefore, obtaining flame retardants with desirable flame retardancy, high thermal stability and excellent processability is a big challenge for the industry. Now, surprisingly, a hybrid dialkylphosphinate salt with specific composition satisfies the above requirements well.

### SUMMARY

In order to solve the above technical problems, the present disclosure provides a hybrid dialkylphosphinate salt, a method for preparation for preparing same, and use thereof. The hybrid dialkylphosphinate salt has composition of Formula (I). The hybrid dialkylphosphinate salt features a low required loading level, high flame-retardant efficiency in various polymers , good thermal stability, a large particle size and low dust, and can satisfy processing requirements of engineering plastics requiring high temperature.

According to a first aspect of the present disclosure, a hybrid dialkylphosphinate salt is provided. The hybrid dialkylphosphinate salt is selected from at least one of the compounds represented by Formula (I): 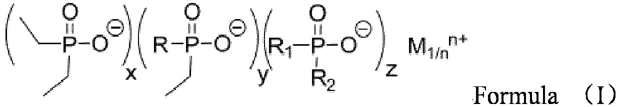
where M is a central atom; R, R₁ and R₂ are independently selected from any one of n-propyl and isopropyl; a diethylphosphinate ion, an ethylpropylphosphinate ion and a dipropylphosphinate ion are ligands; at least two of the diethylphosphinate ions, the ethylpropylphosphinate ion and the dipropylphosphinate ion are paired with a same metal atom, and one of the ligands is the ethylpropylphosphinate ion;
the M is selected from metal elements; the metal element is selected from at least one of group IIA, IIIA, IVA and VA metal elements, a transition metal element and a lanthanide metal element;
n is a valence state of the metal M; n is selected from 2, 3 or 4;
0≤x≤0.80; 0.05≤y≤0.7; and 0≤z≤0.95, and x+y+z=1.

Specifically, the propyl in the ethylpropylphosphinate ions and the dipropylphosphinate ions is n-propyl or isopropyl.

In the examples of the present disclosure, in Formula (I), if x is greater than 0.80, the flame retardant properties are poor. If z is greater than 0.95, particles are small when prepared, filtration is slow, dust is high when used, and thermal stability is reduced, which are unfavorable to preparation and physical properties of flame retardant polymeric materials. If y is greater than 0.7, a preparation cost is high, and the economy is poor, which are unfavorable to preparation and physical properties of flame retardant polymeric materials.

Optionally, a lower limit of x is independently selected from 0, 0.03, 0.05, 0.10, and 0.15. An upper limit is independently selected from 0.80, 0.75, 0.70, 0.65, 0.55, 0.50, 0.45, 0.40, 0.35, and 0.30.

Optionally, a lower limit of y is independently selected from 0.05, 0.10, 0.15, 0.20, 0.25, 0.30, 0.35, and 0.40. An upper limit is independently selected from 0.70, 0.65, 0.60, 0.55, 0.50, and 0.45.

Optionally, a lower limit of z is independently selected from 0, 0.001, 0.005, 0.01, 0.02, 0.05 and 0.08. An upper limit is independently selected from 0.95, 0.9, 0.85, 0.80, 0.75, 0.7, 0.65, 0.60, 0.55, 0.50, 0.45, 0.40, 0.35. 0.3, 0.25, 0.2, 0.15, and 0.10.

Optionally, the group IIA metal element is selected from at least one of Be, Mg, Ca, Sr and Ba;
the group IIIA metal element is Al;
the group IVA metal element is Sn;
the group VA metal element is Sb;
the transition metal element is selected from at least one of Fe, Zn, Cu, Ti, Zr and Mn; and
the lanthanide metal element is Ce.

Optionally, the metal element is selected from at least one of Al, Zn, Ca and Fe.

Optionally, the metal element is Al, and n=3.

Optionally, 0≤x≤0.80; 0.05≤y≤0.70; and 0.005≤z≤0.92.

Optionally, 0≤x≤0.66; 0.30≤y≤0.70; and 0.01≤z≤0.60.

Optionally, 0≤x≤0.30; 0.35≤y <0.70; and 0.05≤z≤0.60.

In the examples of the present disclosure, the greater a value of z is, the lower thermal stability the hybrid dialkylphosphinic acid salt has. hybridThe hybrid dialkylphosphinate salt in the present disclosure is not a simple physical mixture of different dialkylphosphinates, for example, is not a simple mixture of aluminum diethylphosphinate and aluminum ethylpropylphosphinate, but a hybrid salt including at least two of a diethylphosphinate ion, an ethylpropylphosphinate ion and a dipropylphosphinate ion paired with a same aluminum atom. One ligand in the hybrid salt is the ethylpropylphosphinate ion. An X-ray diffraction (XRD) pattern of the hybrid dialkylphosphinate salt is quite different from those of physical mixtures of simple dialkylphosphinates. The hybrid dialkylphosphinate salt of Formula (I) shows a single peak in a strongest absorption peak region in an XRD spectrum. Moreover, an interplanar spacing displayed by a maximum peak is different from those of the aluminum diethylphosphinate and the aluminum dipropylphosphinate. An interplanar spacing displayed by a maximum peak of the aluminum diethylphosphinate is d=9.663, and an interplanar spacing displayed by a maximum peak of the aluminum dipropylphosphinate is d=11.079. A d value of an interplanar spacing of the hybrid dialkylphosphinate salt of Formula (I) lies between the above two values. However, a physical mixture obtained by simple mixing of aluminum diethylphosphinate and aluminum dipropylphosphinate shows two completely independent peaks in its XRD spectrum, and d values of the two peaks are close to d values of the aluminum diethylphosphinate and the aluminum dipropylphosphinate respectively.

In the examples of the present disclosure, two independent peaks also appear in a strongest absorption peak region in an XRD spectrum of the hybrid dialkylphosphinate salt of Formula (I) and the aluminum diethylphosphinate or the aluminum dipropylphosphinate after simple physical mixing. These results strongly indicate that the hybrid dialkylphosphinate salt of Formula (I) obtained according to the present disclosure is not a simple mixture of aluminum diethylphosphinate, aluminum ethylpropylphosphinate and aluminum dipropylphosphinate, but contains a structure in which at least two of diethylphosphinate, ethylpropylphosphinate and dipropylphosphinate are coordinated with a same aluminum atom.

In the examples of the present disclosure, pure aluminum dipropylphosphinate has a desirable flame-retardant effect but low thermal stability at the same loading level, which cannot satisfy requirements of polymeric materials for high temperature processing. Pure aluminum dipropylphosphinate has high dust, and is difficult to handle. Since the particle size of the pure aluminum dipropylphosphinate is small, when mixed with polymers, the pure aluminum dipropylphosphinate is prone to be separated from the latter leading to poor mixing uniformity. In contrast, the hybrid dialkylphosphinate salt of Formula (I) has high thermal stability, large particle sizes, no dust, and similar flow velocity with polymer particles in a charging barrel, ensuring desirable mixing uniformity.

In the examples of the present disclosure, under the same loading level, a flame-retardant effect of the pure diethylphosphinate is poor and is far inferior to that of a hybrid dialkylphosphinate salt of Formula (I).

According to a second aspect of the present disclosure, a method for preparing the hybrid dialkylphosphinate salt is provided. The method includes:
causing reaction I on a material including a mixture A and a metal element M source in an aqueous phase, and obtaining the hybrid dialkylphosphinate salt; where
the mixture A contains diethylphosphinic acid and/or an alkali metal salt of the diethylphosphinic acid, ethylpropylphosphinic acid and/or an alkali metal salt of the ethylpropylphosphinic acid, and dipropylphosphinic acid and/or an alkali metal salt of the dipropylphosphinic acid.

Optionally, the metal element is Al. A pH of the reaction I is 0-4, preferably 1-3.5, and more preferably 2.3-3.3.

Specifically, if the pH of the reaction I is too low, it is difficult to obtain precipitates. If the pH is too high, hydroxide of metal ions is formed, and impurities are introduced.

Optionally, a molar ratio of the diethylphosphinic acid and/or an alkali metal salt of the diethylphosphinic acid to ethylpropylphosphinic acid and/or an alkali metal salts of the ethylpropylphosphinic acid to dipropylphosphinic acid and/or an alkali metal salt of the dipropylphosphinic acid to the metal element M source is approximately x: y: z: q. The propyl is selected from n-propyl and isopropyl, herein q=1/n.

Solubility of the hybrid salt in water varies with M. For a hybrid salt with high solubility, values of x, y, z of the diethylphosphinic acid and/or the alkali metal salt of the diethylphosphinic acid, the ethylpropylphosphinic acid and/or the alkali metal salt of the ethylpropylphosphinic acid, the dipropylphosphinic acid and/or the alkali metal salt of the dipropylphosphinic acid in a solution can differ from those in the hybrid salt, thus, the molar ratio to the M source can also change. Moreover, in order to obtain more M-containing precipitates, the molar ratio of reactants x, y, z to the M can also be greater than a theoretical calculation value.

In practice, actual values of x, y, z and q can be determined by phosphorus nuclear magnetic resonance.

Optionally, the molar ratio of the diethylphosphinic acid and/or the alkali metal salt of the diethylphosphinic acid to the ethylpropylphosphinic acid and/or the alkali metal salt of the ethylpropylphosphinic acid to the dipropylphosphinic acid and/or the alkali metal salt of the dipropylphosphinic acid in the mixture A is the same or substantially the same as the ratio of x to y to z in Formula (I).

Optionally, the reaction I is carried out at conditions of temperature of 0°C-250°C, pressure of 0.1 MPa-10 MPa, and time of 0.1 h-20 h.

Optionally, obtaining of the mixture A includes:
introducing ethylene and propylene into an aqueous solution containing phosphinic acid and/or an alkali metal salt of the phosphinic acid, and a radical initiator for reaction II, and obtaining the mixture A.

Optionally, a molar ratio of the phosphinic acid and/or the alkali metal salt of the phosphinic acid to the ethylene to the propylene is 1: 0.05-1.8: 0.2-1.95.

In an actual reaction, the consumption amount of olefin is higher than a theoretical ratio due to existence of some side reactions, such as long-chain dialkylphosphinate obtained by ethylene and/or propylene polymerization.

Optionally, the molar ratio of the phosphinic acid and/or the alkali metal salt of the phosphinic acid to the ethylene to the propylene is the same as or close to the values of x, y and z in Formula (I). In the reaction of the phosphinic acid or the alkali metal salt of the phosphinic acid with the ethylene or the propylene, since the value of y has a maximum value less than 1, after the maximum value is reached, x or z increases, such that y cannot reach 1. If y=1 is to be prepared, a reaction intermediate product needs to be isolated and purified to remove the diethylphosphinic acid and/or the dipropylphosphinic acid or their salts, which is not economic.

Specifically, in the reaction II, an order of addition of the ethylene and the propylene may be reversed. The ethylene and the propylene may be added simultaneously, or partially added first.

Optionally, in the reaction II, the phosphinic acid and/or the alkali metal salt of the phosphinic acid reacts with the propylene to obtain corresponding values of y and z before reacting substantially completely or completely with the ethylene. Substantially completely means that a total phosphorus content of ethylphosphinate, propylphosphinate and hypophosphite in a reaction mixture is less than 5 mol% of a total phosphorus content in the reaction mixture.

Optionally, mass of water in the aqueous solution is 10%-99% of total mass of the aqueous solution.

Specifically, in the aqueous solution, if the amount of water is too little, a salting-out effect results in low solubility of olefin in the water, and a reaction slows down. If the amount of water is too much, a utilization rate of a reaction kettle decreases.

Optionally, mass of water in the aqueous solution is 20%-95% of total mass of the aqueous solution.

Optionally, mass of water in the aqueous solution is 45%-92% of total mass of the aqueous solution.

Optionally, mass of water in the aqueous solution is 50%-90% of total mass of the aqueous solution.

Optionally, mass of water in the aqueous solution is 55%-90% of total mass of the aqueous solution.

Optionally, the reaction II is carried out at conditions of temperature of 0°C-250°C, time of 0.01 h-50 h, and pressure of 0 MPa-3 MPa.

Specifically, if the temperature of the reaction II is too low, a reaction slows down. If the temperature is too high, the hypophosphite is prone to decomposition.

Optionally, the temperature of the reaction II is 10°C-200°C.

Specifically, when the pressure of the reaction II is greater than 3 MPa, requirements for a reaction apparatus are increased, and an operation is difficult.

Optionally, the pressure of the reaction II is 0.2 MPa-1.5 MPa.

Optionally, a molar ratio of the radical initiator to the phosphinic acid and/or the alkali metal salt of the phosphinic acid is 0.001-0.1: 1.

Optionally, the radical initiator is selected from at least one of an azo initiator, a peroxide initiator and a photoinitiator. The addition amount of the radical initiator can be determined according to actual needs.

Optionally, the azo initiator is selected from cationic and/or non-cationic azo initiators, including one or more of azo bisisobutyronitrile, 4,4' azobis (4-cyanovaleric acid), 2,2'-azobis (2-methylbutyronitrile), 2,2'-azobis (2-amidinopropane) dichloride, and 2,2'-azo dipropyl amidine dihydrochloride.

Optionally, the peroxide initiator is preferably an inorganic peroxide radical initiator and an organic peroxide radical initiator, particularly preferably one or more of hydrogen peroxide, ammonium persulfate, potassium persulfate, sodium persulfate, sodium percarbonate, benzoyl peroxide, di-tert-butyl peroxide, tert-butyl perbenzoate and peracetic acid.

Preferably, the radical initiator is a peroxide. Particularly preferably, the radical initiator is selected from one of ammonium persulfate, potassium persulfate and sodium persulfate.

Optionally, a molar ratio of the radical initiator to the phosphinic acid and/or the alkali metal salt of the phosphinic acid is 0.003-0.05: 1.

Optionally, obtaining of the mixture A includes:
introducing the propylene into an aqueous solution containing phosphinic acid and/or an alkali metal salt of the phosphinic acid and a radical initiator for reaction, after a molar ratio of the introduced propylene to total phosphorus of the phosphinic acid and/or the alkali metal salt of the phosphinic acid reaches (y+2z)/1 in Formula (I), stopping introducing the propylene, then introducing the ethylene for reaction, and obtaining the mixture A.

Optionally, obtaining of the mixture A includes:
introducing the propylene into an aqueous solution containing phosphinic acid and/or an alkali metal salt of the phosphinic acid and a radical initiator, then introducing the ethylene for reaction after the propylene completely or nearly completely reacts, and obtaining the mixture A.

Optionally, the phosphinic acid and/or the alkali metal salt of the phosphinic acid reacts with the propylene to obtain propylphosphinic acid or an alkali metal salt of the mono-propylphosphinic acid having a value of y or a value substantially close to y, z is controlled to be less than or equal to 0.95, the propylene is stopped, the ethylene is added instead, and reaction is continued in the presence of the initiator. Subsequent reaction with a desired metal salt proceeds, such that a flame retardant of Formula (I) is obtained.

Optionally, obtaining of the mixture A includes:
introducing the propylene and portion of the ethylene into an aqueous solution containing phosphinic acid and/or an alkali metal salt of the phosphinic acid and a radical initiator for reaction, where a molar ratio of the ethylene to total phosphorus of the phosphinic acid and/or the alkali metal salt of the phosphinic acid is less than (2x+y)/1 in Formula (I), after a molar ratio of the introduced propylene to the total phosphorus of the phosphinic acid and/or the alkali metal salt of the phosphinic acid reaches (y+2z)/1 in Formula (I), stopping introducing the propylene, then introducing the remaining ethylene for reaction, and obtaining the mixture A.

Optionally, obtaining of the mixture A includes:
introducing the propylene and portion of the ethylene into an aqueous solution containing phosphinic acid and/or an alkali metal salt of the phosphinic acid and a radical initiator, and after the propylene and the portion of the ethylene react completely or nearly completely, introducing the remaining ethylene for reaction, and obtaining the mixture A.

A molar ratio of the total amount of the ethylene to the propylene is 0.026-9: 1.

Optionally, obtaining of the mixture A includes:
introducing portion of the ethylene into an aqueous solution containing phosphinic acid and/or an alkali metal salt of the phosphinic acid and a radical initiator, where a molar ratio of the portion of the ethylene to total phosphorus of the phosphinic acid and/or the alkali metal salt of the phosphinic acid is less than (2x+y)/1 in Formula (I), after the portion of the ethylene completely reacts, introducing the propylene for reaction, after a molar ratio of the introduced propylene to the total phosphorus of the phosphinic acid and/or the alkali metal salt of the phosphinic acid reaches (y+2z)/1 in Formula (I), stopping introducing the propylene, then introducing the remaining ethylene for reaction, and obtaining the mixture A.

Optionally, obtaining of the mixture A includes:
introducing portion of the ethylene into an aqueous solution containing phosphinic acid and/or an alkali metal salt of the phosphinic acid and a radical initiator, after the portion of the ethylene reacts completely or nearly completely, introducing the propylene for reaction, after the propylene reacts completely or nearly completely, introducing the remaining ethylene for reaction, and obtaining the mixture A.

A molar ratio of the total amount of the ethylene to the propylene is 0.026-9: 1.

Optionally, a metal element M source is selected from at least one of metal element M salts.

Optionally, the metal element M salt is selected from at least one of nitrate, sulfate, hydrochloride, acetate and oxide of the metal element M.

Optionally, the phosphinic acid and/or the alkali metal salt of the phosphinic acid react with the propylene and portion of the ethylene simultaneously in the presence of the radical initiator. The amount of the propylene and the ethylene is controlled. When a mole percentage of the propylphosphinic acid or an alkali metal salt of the propylphosphinic acid in a reaction system is close to a value of y, a mole percentage of dipropylphosphinic acid or an alkali metal salt of the dipropylphosphinic acid is close to a value of z, and z is less than or equal to 0.95, the flow of propylene is stopped. Then the remaining ethylene is added, and the reaction is continued until the end in the presence of the initiator. Subsequent reaction with a desired metal salt proceeds, and a hybrid dialkylphosphinate salt of Formula (I) is obtained.

Optionally, obtaining of the mixture A includes:
introducing the ethylene into an aqueous solution containing phosphinic acid and/or an alkali metal salt of the phosphinic acid and a radical initiator for reaction, controlling the amount of the ethylene, after a molar ratio of the introduced ethylene to total phosphorus of the phosphinic acid and/or the alkali metal salt of the phosphinic acid reaches (y+2z)/1 in Formula (I), stopping introducing the ethylene, then introducing propylene for reaction in the presence of the initiator until the reaction ends, and obtaining the mixture A.

Specifically, after the reaction II is finished, the subsequent reaction can be directly carried out without separating the diethylphosphinic acid, the ethylpropylphosphinic acid, the dipropylphosphinic acid or a mixture of their alkali metal salts.

According to a third aspect of the present disclosure, a flame retardant is further provided. The flame retardant includes at least one of the hybrid dialkylphosphinate salt described above.

Optionally, the flame retardant further includes at least one of phosphate ions, phosphite ions, mono-alkylphosphinate ions and alkylphosphonate ions. A mole percent of these phosphorus-containing acid radical ions in the flame retardant is less than or equal to 10% of total phosphorus. The mole number of the flame retardant is calculated by the mole number of the phosphorus element included in the flame retardant.

According to a fourth aspect of the present disclosure, a flame retardant material is provided. The flame retardant material includes a flame retardant P and a thermoplastic macromolecular material.

The flame retardant P is selected from at least one of the hybrid dialkylphosphinate salt and the flame retardants.

Optionally, a mass percent of the flame retardant P in the flame retardant material is 1%-35%.

Optionally, the flame retardant material includes 1 wt%-35 wt% of a flame retardant P and 65 wt%-99 wt% of thermoplastic polymers.

The thermoplastic polymer in the present disclosure refers to plastics having characteristics of softening by heating and hardening by cooling.

Specifically, the required amount of the flame retardant P depends on the thermoplastic polymer.

Optionally, a mass percent of the flame retardant P in the flame retardant material is 3%-20%.

Optionally, the flame retardant material further includes a functional additive.

The functional additive is selected from at least one of a reinforcing agent, an anti-dripping agent, a stabilizer, a pigment, a dye, a charring catalyst, a dispersant, a nucleating agent, an inorganic filler and an antioxidant.

Optionally, the reinforcing agent is glass fibers.

Optionally, the anti-dripping agent is Teflon.

Optionally, the inorganic filler is selected from at least one of mica, calcium carbonate, calcium oxide and silica.

Optionally, a mass percent of the functional additive in the flame retardant material is 5%-40%.

Optionally, the flame retardant material further includes a flame retardant Q.

The flame retardant Q is selected from at least one of a nitrogen flame retardant and a boron flame retardant.

Optionally, the nitrogen flame retardant is selected from at least one of melamine cyanurate, melamine polyphosphate and ammonium polyphosphate.

The boron flame retardant is zinc borate.

Optionally, a mass percent of the flame retardant Q in the flame retardant material is 0.5%-20%.

Optionally, the thermoplastic polymer is selected from at least one of polyamide and polyester.

Optionally, the polyamide is selected from at least one of aliphatic polyamide, aromatic polyamide, semi-aromatic polyamide, and a copolymer of semi-aromatic polyamide and aliphatic polyamide.

According to common knowledge in the art, polyamide, also known as nylon, is a generic term for polymers including -NH-C(O)-amide groups in structural units, and is synthesized by condensation or ring-opening reactions of one or more kinds of dicarboxylic acid and one or more kinds of diamine, and/or one or more kinds of amino acid, and/or one or more kinds of lactam. The polyamide is generally classified into aliphatic polyamide, aromatic polyamide and semi-aromatic polyamide according to composition of a main chain. The semi-aromatic polyamide means that at least one monomer structure of a synthetic monomer includes an aromatic group.

Optionally, the aliphatic polyamide is optionally selected from one or a mixture of several of a copolymer of polyamide 6 and polyamide 66, polyamide 6 and polyamide 66.

Optionally, the semi-aromatic polyamide may be prepared from any one or more kinds of aromatic dicarboxylic acid and any one or more kinds of aliphatic diamine, or from any one or more kinds of aromatic diamine and any one or more kinds of aliphatic dicarboxylic acid. One or more kinds of dicarboxylic acid, diamine, lactam and amino acid can be optionally added to the system, to prepare polyamide copolymers with corresponding properties. The added dicarboxylic acid is aromatic dicarboxylic acid and/or aliphatic dicarboxylic acid. The added diamine is aromatic diamine and/or aliphatic diamine. The added lactam may be aliphatic lactam or aromatic lactam. The added amino acid may be aromatic amino acid or aliphatic amino acid.

Optionally, the semi-aromatic polyamide is prepared from one or more kinds of aromatic dicarboxylic acid optionally selected from terephthalic acid, isophthalic acid, and naphthalenedicarboxylic acid, and one or more kinds of aliphatic diamine optionally selected from butylene diamine, hexane diamine, octane diamine, decane diamine, and 2-methylpentylene diamine.

Optionally, the semi-aromatic polyamide is prepared from aliphatic diamine, aromatic dicarboxylic acid, and aliphatic dicarboxylic acid.

Optionally, the semi-aromatic polyamide is prepared from aliphatic diamine and aromatic dicarboxylic acid. Optionally, aliphatic dicarboxylic acid may also be added, and a mole fraction of aliphatic dicarboxylic acid accounts for 0-45% of the total amount of dicarboxylic acid, that is, the mole number of aliphatic dicarboxylic acid/(the mole number of aliphatic dicarboxylic acid+the mole number of aromatic dicarboxylic acid)= 0-45%.

Optionally, the aromatic dicarboxylic acid is optionally selected from one or more of terephthalic acid, isophthalic acid and naphthalene dicarboxylic acid. The aliphatic diamine is optionally selected from one or more of butylene diamine, hexane diamine, octane diamine, decane diamine and 2-methylpentylene diamine. The aliphatic dicarboxylic acid is optionally selected from one or more of adipic acid, succinic acid, sebacic acid and suberic acid.

Optionally, the polyamide is optionally selected from one or more of polyhexamethylene terephthalamide (PA6T), polyhexamethylene isophthalamide (PA6I), a terephthalic acid/hexamethylenediamine/caprolactam copolymer (PA6T/6), a terephthalic acid/hexamethylenediamine/adipic acid copolymer (PA6T/66), a terephthalic acid/hexamethylenediamine/adipic acid/isophthalic acid copolymer (PA6T/6I/66), iminocarbonyl-1,4-phenylenecarbonylimino-1,9-nonanediyl (PA9T), polydecanediamide terephthaloyl (PA10T), polydodecylenediamine terephthaloyl (PA12T), a terephthalic acid/hexamethylenediamine/dodecylactam copolymer (PA6T/12), poly-adipic acid meta-xylenediamine (MXD6), a terephthalic acid/hexamethylenediamine/2-methylpentylenediamine copolymer (PA6T/2-MPMDT), a terephthalic acid/2,2,4-trimethylhexamethylenediamine/2,4,4-trimethylhexamethylenediamine copolymer.

Optionally, the aliphatic polyamide is selected from at least one of polyamide 6, polyamide 66, and a copolymer of polyamide 6 and polyamide 66.

Optionally, the semi-aromatic polyamide is polyphthalamide (PPA).

Optionally, the polyester is polybutylene terephthalate (PBT).

In the examples of the present disclosure, the values of x, y and z in Formula (I) do not consider the amount of other phosphorus impurities, x+y+z=1, and x+z>0. A flame retardant having composition of Formula (I) may include trace amounts of other phosphorus ions. Due to impurities in raw materials or impurities generated by a synthesis process, trace amounts of phosphate ions, phosphite ions, mono-alkylphosphinate ions, and alkylphosphinate ions may exist in the flame retardant. Oligomer products, such as ethyl-n-butylphosphinate ions, ethylhexylphosphinate ions, butylbutylphosphinate ions, butylhexylphosphinate ions and propylhexylphosphinate ions, derived from ethylene or propylene polymerization may also exist as impurities in the flame retardant of Formula (I). However, as long as the total amount of these other phosphorus-containing ions does not exceed 5% mol of the total phosphorus, they do not influence the normal operation of the flame retardant with composition of Formula (I).

In the examples of the disclosure, a ratio of x to y to z in Formula (I) may be determined by ³¹P-nuclear magnetic resonance (NMR) after alkaline or acid hydrolysis of the flame retardant. Diethylphosphinate, ethyl-n-propylphosphinate, ethylisopropylphosphinate, di-n-propylphosphinate and n-propylisopropylphosphinate have different chemical shifts of ³¹P and present five independent peaks in a ³¹P-NMR spectra. Peak areas of the five peaks correspond to molar concentrations of five dialkylphosphinate ions respectively. In some cases, long-chain dialkylphosphinate ions are present in small amounts and have chemical shifts close to the corresponding dialkylphosphinate ions, such that the long-chain dialkylphosphinate ions are incorporated into the corresponding dialkylphosphinate ions when integrated. Accordingly, the values of x, y and z can be conveniently calculated by means of the ratio of peak areas. For example, a molar concentration of diethylphosphinate corresponds to x, a sum of molar concentrations of ethyl-n-propylphosphinate and ethylisopropylphosphinate (abbreviated as a molar concentration of ethylpropylphosphinate) corresponds to y, a sum of a molar concentrations of di-n-propylphosphinate and n-propylisopropylphosphinate (abbreviated as a molar concentration of dipropylphosphinate) corresponds to z, and the ratio of the three is the value of x, y and z.

The present disclosure can have the following beneficial effects.
(1) The hybrid dialkylphosphinate salt of Formula (I) provided in the present disclosure has a low required loading level, easy filtration due to its large particle sizes, less dust, high thermal stability, high flame-retardant efficiency for polymers and desirable economy. The present disclosure overcomes the disadvantage of low flame retardant efficiency of diethylphosphinate in polymers as well as the low thermal stability and large dust of dipropylphosphinate. The hybrid dialkylphosphinate salt of Formula (I) can be widely applied to flame retard polymers which require high-temperature processing.
(2) The present disclosure provides a method for preparing a hybrid dialkylphosphinate salt, which avoids a shortcoming that different dialkylphosphinic acids need to be independently prepared separately. Water is used as a reaction solvent, and the process is environmentally friendly. The raw materials are easily available and the economy is high.

### BRIEF DESCRIPTION OF THE DRAWINGS

FIG. 1 is a thermogravimetric analysis of hybrid dialkylphosphinate salts with different values of x, y and z, aluminum diethylphosphinate and aluminum dipropylphosphinate.
FIGs. 2a and 2b are X-ray diffraction (XRD) curves of hybrid dialkylphosphinate salts with different values of x, y, and z, aluminum diethylphosphinate and aluminum dipropylphosphinate, where FIG. 2b is a partial enlargement of the strongest absorption peak of FIG. 2a.
FIG. 3 is a ³¹P-nuclear magnetic resonance (NMR) spectrum of a hybrid dialkylphosphinate salt after alkaline hydrolysis in Example 7.

### DETAILED DESCRIPTION OF THE EMBODIMENTS

The present disclosure is described in detail below in conjunction with examples, but the present disclosure is not limited to these examples.

Unless otherwise specified, raw materials in the examples of the disclosure were purchased commercially.

The raw materials used in the examples are as follows:
PA66 (also known as polyamide 66 or nylon 66): Zytel 70G35 HSL NC010 from DuPont, American, where a glass fiber content is 35% by weight.
PA6 (also known as polyamide 6 or nylon 6): Zytel 73G30L NC010 from DuPont, American, where a glass fiber content is 30% by weight.
ADP: Aluminum diethylphosphinate, Exolit OP1230 from Clariant, Germany.
Antioxidant 1010: tetrakis[β-(3,5-di-tert-butyl-4-hydroxyphenyl) propionic acid] pentaerythritol ester, from Shanghai macklin Biochemical Technology Co., Ltd.
Antioxidant 168: tris[2,4-di-tert-butyl phenyl] phosphite, from Strem Chemicals, Inc., from American.
Composite antioxidant: prepared by mixing the antioxidant 1010 (tetrakis[beta-(3, 5-di-tert-butyl-4-hydroxyphenyl) propionic acid] pentaerythritol ester) and the antioxidant 168 (tris[2, 4-di-tert-butylphenyl] phosphite) in a weight ratio of 1:1.
Combustion test standard: GB/T 2408-2008 standard.
Nuclear magnetic resonance (NMR) measurement: using an instrument with a model of AVANCE III 400 MHz, from Bruker, Germany.
Nuclear magnetic resonance phosphorus spectrum (³¹P-NMR) test method: pre-delay is D1=10 seconds, scanning is performed for 32 times, and a peak area ratio is regarded as a molar ratio of diethylphosphinate, ethylpropylphosphinate and dipropylphosphinate ions.

A model of an X-ray diffraction (XRD) test instrument is D8 ADVANCE DAVINCI, from Bruker, Germany.

Model of an instrument used for TGA thermal weight loss treatment: Q500, from TA Company, USA. A heating rate is 10°C/min in a nitrogen atmosphere.

Particle size D₅₀: Heloise-oasis HELOS (H3938), from Sympatec, Germany, dry test.

In the present disclosure, R, R₁ and R₂ are all selected from any one of n-propyl and isopropyl, and two different propyl groups may fall into a same unit structure represented by y or z. That is to say, in the same unit structure represented by y, R can be n-propyl and isopropyl, but R group cannot be defined specifically in detail in specific examples sine it can vary. The ratio of n-propyl and the ratio of isopropyl do not need to be defined in each unit structure represented by y or z, only the total ratio needs to satisfy the criteria. Applicants gave illustrative specifications in Table 1. For example, a subscript of a double-mixed structural formula corresponds to y, which includes double-mixed 1 (R=isopropyl) and double-mixed 2 (R= n-propyl).

### Example 1

### Preparation of hybrid salt of Formula (I), where x=0, y=0.086, z=0.914, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with propylene until pressure no longer rose. A reaction solution was heated to about 90°C and a pressure gauge showed 0.75 MPa. Then a sodium persulfate aqueous solution with a mass concentration of 4% was injected at a constant speed of 10 ml/h. The propylene was continuously introduced into the reaction kettle. The introduced amount of olefin was measured by a gas flow meter. After 9 hours, the flow of propylene was stopped. Ethylene was started to be introduced. After 16 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR results are shown in Table 1.

**Table 1**

| Reaction time (hour) | Double-addition product | | | | Mono-addition product | | | | Hypophosphit e ion | Phosphite io n |
|---|---|---|---|---|---|---|---|---|---|---|
| | Double mixed 1 | Diethyl | Double mixed 2 | Dipropyl | Mono ethyl | Mono propyl 1 | Mono propyl 2 | Phosphonate | | |
| 8 | 0 | 0 | 0 | 77.5% | 0 | 1.7% | 17.1% | 0.3% | 2.5% | 0.9% |
| 14.5 | 1.4% | 0 | 7.6% | 88.6% | 0 | 0 | 0.7% | 0.9% | 0 | 0.8% |
| 16 | 1.6% | 0 | 8.0% | 88.7% | 0 | 0 | 0 | 1.0% | 0 | 0.7% |

| | | | | | | | | | | |
|---|---|---|---|---|---|---|---|---|---|---|
| Note: double-addition product: addition products of hypophosphite and olefin with both P-H bonds of hypophosphite reacted; mono-addition product: addition products of one P-H bond of hypophosphite to an olefin double bond with one P-H bond retained in the addition product; double mixed 1: ethylisopropylphosphinate ion (R = isopropyl); double mixed 2: ethyl-n-propylphosphinate ion (R = n-propyl); dipropyl: a sum of n-propylisopropylphosphinate ion (R₁≠R₂, which are n-propyl and isopropyl respectively) and di-n-propylphosphinate ion (R₁=R₂=n-propyl); mono ethyl: ethylphosphinate ion; mono propyl 1: isopropylphosphinate ion; mono propyl 2: n-propylphosphinate ion; and phosphonate: a sum of ethylphosphonate ion and propylphosphonate ion. These terms are used here and elsewhere in this application. | | | | | | | | | | |

551.94 g of the above solution (0.6 mol of phosphorus) was slowly mixed with an aqueous solution containing 66.64 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 93 g of white solid. A sample was dissolved in a sodium hydroxide aqueous solution. Its phosphorus nuclear magnetic resonance spectrum showed 8.6 mol% of a sum of ethylpropylphosphinate ions, 91.0 mol% of a sum of dipropylphosphinate ions, and 0.4% of propyl phosphonate ions. After normalization, x=0, y=0.086, and z=0.914.

The sample was tested for a particle size, and D₅₀=53.71 µm.

An XRD measurement was performed on the sample. An interplanar spacing corresponding to the characteristic peak with a highest relative intensity determined by XRD was 11.109 Å (100%).

### Example 2 Preparation of hybrid salt of Formula (I), where x=0, y=0.192, z=0.808, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with propylene until pressure no longer rose. A reaction solution was heated to about 90°C and a pressure gauge showed 0.75 MPa. Then a sodium persulfate aqueous solution with a mass concentration of 4% was injected at a constant speed of 10 ml/h. The propylene was continuously introduced into the reaction kettle. The introduced amount of olefin was measured by a gas flow meter. After 8.5 hours, the flow of propylene was stopped. Ethylene was started to be introduced. After 15.5 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR results are shown in Table 2.

**Table 2**

| Time (hour) | Double-addition product | | | | Mono-addition product | | | | Hypophosphit e ion | Phosphite ion |
|---|---|---|---|---|---|---|---|---|---|---|
| | Double mixed 1 | Diethyl | Double mixed 2 | Dipropyl | Mono ethyl | Mono propyl 1 | Mono propyl 2 | Phosphonate | | |
| 6.5 | 0 | 0 | 0 | 5.3% | 0 | 5.2% | 56.8% | 0 | 31.6% | 1.1% |
| 10.5 | 0 | 0 | 0 | 70.5% | 0 | 2.5% | 24.7% | 0.4% | 0.3% | 1.6% |
| 15.5 | 1.8% | 0 | 17.8% | 78.7% | 0 | 0 | 0 | 0.8% | 0 | 0.9% |

559.8 g of the above solution (0.6 mol of phosphorus) was slowly mixed with an aqueous solution containing 66.64 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 90 g of white solid in a yield of 98.4%. A sample was dissolved in a sodium hydroxide aqueous solution. Phosphorus nuclear magnetic resonance was performed. From a phosphorus NMR spectrum, a sum of dipropylphosphinate ions was 80.8 mol%, and a sum of ethylpropylphosphinate ions was 19.2 mol%. Therefore, x=0, y=0.192, and z=0.808.

The sample was tested for a particle size, and D₅₀=24.66 µm.

An XRD measurement was performed on the sample. An interplanar spacing corresponding to the characteristic peak with a highest relative intensity determined by XRD was 11.024 Å (100%).

### Example 3 Preparation of hybrid salt of Formula (I), where x=0, y=0.412, z=0.588, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with propylene until pressure no longer rose. A reaction solution was heated to about 90°C and a pressure gauge showed about 0.70 MPa. Then a sodium persulfate aqueous solution with a mass concentration of 4% was injected at a constant speed of 10 ml/h. The propylene was continuously introduced into the reaction kettle. The introduced amount of olefin was measured by a gas flow meter. After 6 hours, the flow of propylene was stopped. Ethylene was started to be introduced. The pressure was maintained to be 0.8 MPa. After 17.5 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR results are shown in Table 3.

**Table 3**

| Time (hour) | Double-addition product | | | | Mono-addition product | | | | Hypophosphit e ion | Phosphite ion |
|---|---|---|---|---|---|---|---|---|---|---|
| | Double mixed 1 | Diethy 1 | Double mixed 2 | Dipropy l | Mono ethyl | Mono propyl 1 | Mono propyl 2 | Phosphonate | | |
| 5.5 | 0 | 0 | 0 | 8.5% | 0 | 6.8% | 62.7% | 0 | 21% | 1.0% |
| 16 | 4.2% | 0 | 35.3% | 54.5% | 0 | 0.4% | 3.6% | 1.0% | 0.2% | 0.8% |
| 17.5 | 4.3% | 0 | 37.4% | 55.9% | 0 | 0.2% | 0.8% | 0.5% | 0.2% | 0.7% |

559.94 g of the above solution (0.6 mol of phosphorus) was slowly mixed with an aqueous solution containing 66.64 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 87.3 g of white solid in a yield of 98%. A sample was dissolved in a sodium hydroxide aqueous solution. Phosphorus nuclear magnetic resonance was performed. From a phosphorus NMR spectrum, a sum of dipropylphosphinate ions was 58.3mol%, a sum of ethylpropylphosphinate ions was 40.9mol%, and the balance of other phosphorus impurities was 0.8 mol%. The phosphorous impurities include propylphosphinate ions, propyl phosphonate ions, etc. After normalization, x=0, y=0.412, and z=0.588.

The sample was tested for a particle size, and D₅₀=27.69 µm.

An XRD measurement was performed on the sample. An interplanar spacing corresponding to the characteristic peak with a highest relative intensity determined by XRD was 10.841 Å (100%).

### Example 4 Preparation of hybrid salt of Formula (I), where x=0.033, y=0.610, z=0.357, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with propylene until pressure no longer rose. A reaction solution was heated to about 90°C and a pressure gauge showed about 0.70 MPa. Then a sodium persulfate aqueous solution with a mass concentration of 4% was injected at a constant speed of 10 ml/h. The propylene was continuously introduced into the reaction kettle. The introduced amount of olefin was measured by a gas flow meter. After 5.5 hours, the flow of propylene was stopped. Ethylene was started to be introduced. The pressure was maintained to be 0.8 MPa. After 16 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR results are shown in Table 4.

**Table 4**

| Time (hour) | Double-addition product | | | | Mono-addition product | | | | Hypophosphite ion | Phosphite ion |
|---|---|---|---|---|---|---|---|---|---|---|
| | Double mixed 1 | Diethyl | Double mixed 2 | Dipropy l | Mono ethyl | Mono propyl 1 | Mono propyl 2 | Phosphonat e | | |
| 6.5 | 0 | 0 | 0 | 17.0% | 0 | 5.7% | 67.2% | 0 | 9.3% | 0.8% |
| 16 | 5.9% | 3.8% | 54.9% | 34.1% | 0 | 0 | 0 | 0.7% | 0 | 0.6% |

536.33 g of the above solution (0.6 mol of phosphorus) was slowly mixed with an aqueous solution containing 66.64 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 86.1 g of white solid in a yield of 98%. A sample was dissolved in a sodium hydroxide aqueous solution. Phosphorus nuclear magnetic resonance was performed. From a phosphorus NMR spectrum, a sum of diethylphosphinate ions was 3.3 mol%, a sum of dipropylphosphinate ions was 35.7 mol%, and a sum of ethylpropylphosphinate ions was 61.0 mol%; and x=0.033, y=0.610, and z=0.357.

The sample was tested for a particle size, and D₅₀=29.98 µm.

An XRD measurement was performed on the sample. An interplanar spacing corresponding to the characteristic peak with a highest relative intensity determined by XRD was 10.750 Å (100%).

### Example 5 Preparation of hybrid salt of Formula (I), where x=0.082, y=0.694, z=0.224, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with propylene until pressure no longer rose. A reaction solution was heated to about 90°C and a pressure gauge showed about 0.70 MPa. Then a sodium persulfate aqueous solution with a mass concentration of 4% was injected at a constant speed of 10 ml/h. The propylene was continuously introduced into the reaction kettle. The introduced amount of olefin was measured by a gas flow meter. After 5 hours, the flow of propylene was stopped. Ethylene was started to be introduced. The pressure was maintained to be 0.8 MPa. After 15 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR result are shown in Table 5.

**Table 5**

| Time (hour) | Double-addition product | | | | Mono-addition product | | | | Hypophosphite ion | Phosphite ion |
|---|---|---|---|---|---|---|---|---|---|---|
| | Double mixed 1 | Diethyl | Double mixed 2 | Dipropyl | Mono ethyl | Mono propyl 1 | Mono propyl 2 | Phosphonate | | |
| 5.5 | 0 | 0 | 0 | 11.4% | 0 | 6.9% | 63.9% | 0 | 17.0% | 0.9% |
| 14 | 6.2% | 8.5% | 61.9% | 20.6% | 0 | 0 | 1.5% | 0.8% | 0 | 0.5% |
| 15 | 6.5% | 8.6% | 60.5% | 20.7% | 0 | 0 | 1.3% | 1.3% | 0.3% | 0.8% |

548.44 g of the above solution (0.6 mol of phosphorus) was slowly mixed with an aqueous solution containing 66.64 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 84 g of white solid in a yield of 99%. A sample was dissolved in a sodium hydroxide aqueous solution. Phosphorus nuclear magnetic resonance was performed. From a phosphorus NMR spectrum, a sum of diethylphosphinate ions was 8.1 mol%, a sum of dipropylphosphinate ions was 22.2 mol%, a sum of ethylpropylphosphinate ions was 68.5 mol%, and a sum of the balance of other phosphorus impurities such as propylphosphinate ions and propyl phosphonate ions was 1.3 mol%. After normalization, x=0.082, y=0.694, and z=0.224.

The sample was tested for a particle size, and D₅₀=49.26 µm.

An XRD measurement was performed on the sample. An interplanar spacing corresponding to the characteristic peak with a highest relative intensity determined by XRD was 10.603 Å (100%).

### Example 6 Preparation of hybrid salt of Formula (I), where x=0.251, y=0.647, z=0.102, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with propylene until pressure no longer rose. A reaction solution was heated to about 90°C and a pressure gauge showed about 0.70 MPa. Then a sodium persulfate aqueous solution with a mass concentration of 4% was injected at a constant speed of 10 ml/h. The propylene was continuously introduced into the reaction kettle. The introduced amount of olefin was measured by a gas flow meter. After 4.5 hours, the flow of propylene was stopped. Ethylene was started to be introduced. The pressure was maintained to be 0.8 MPa. After 15.5 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR results are shown in Table 6.

**Table 6**

| Time (hour) | Double-addition product | | | | Mono-addition product | | | | Hypophosphite ion | Phosphite ion |
|---|---|---|---|---|---|---|---|---|---|---|
| | Double mixed 1 | Diethyl | Double mixed 2 | Dipropyl | Mono ethyl | Mono propyl 1 | Mono propyl 2 | Phosphonate | | |
| 4 | 0 | 0 | 0 | 5.3% | 0 | 5.5% | 54.7% | 0 | 33.5% | 1.0% |
| 12 | 5.7% | 26.0% | 53.5% | 9.5% | 0 | 0 | 2.4% | 0.8% | 1.5% | 0.6% |
| 15.5 | 5.8% | 27.0% | 55.9% | 10.0% | 0 | 0 | 0 | 0.8% | 0 | 0.5% |

544.38 g of the above solution (0.6 mol of phosphorus) was slowly mixed with an aqueous solution containing 66.64 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 80.4 g of white solid in a yield of 96%. A sample was dissolved in a sodium hydroxide aqueous solution. Phosphorus nuclear magnetic resonance was performed. From a phosphorus NMR spectrum, a sum of diethylphosphinate ions was 25.1mol%, a sum of dipropylphosphinate ions was 10.2mol%, and a sum of ethylpropylphosphinate ions was 64.7mol%; and x=0.251, y=0.647, and z=0.102.

The sample was tested for a particle size, and D₅₀=49.85 µm.

An XRD measurement was performed on the sample. An interplanar spacing corresponding to the characteristic peak with a highest relative intensity determined by XRD was 10.449 Å (100%).

### Example 7 Preparation of hybrid salt of Formula (I), where x=0.257, y=0.652, z=0.091, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with propylene until pressure no longer rose. A reaction solution was heated to about 90°C and a pressure gauge showed about 0.70 MPa. Then a sodium persulfate aqueous solution with a mass concentration of 4% was injected at a constant speed of 10 ml/h. The propylene was continuously introduced into the reaction kettle. The introduced amount of olefin was measured by a gas flow meter. After 5 hours, the flow of propylene was stopped. Ethylene was started to be introduced. The pressure was maintained to be 0.8 MPa. After 15.5 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR results are shown in Table 7.

**Table 7**

| Time (hour) | Double-addition product | | | | Mono-addition product | | | | Hypophosphite ion | Phosphite ion |
|---|---|---|---|---|---|---|---|---|---|---|
| | Double | Diethyl | Double | Dipropyl | Mono | Mono | Mono | Phosphonate | | |
| | | | | | | | | | | |
| | mixed 1 | | mixed 2 | | ethyl | propyl 1 | propyl 2 | | | |
| 5 | 0 | 0 | 0 | 3.4% | 0 | 5.3% | 54.8% | 0 | 35.6% | 0.9% |
| 13 | 5.6% | 27.8% | 55.7% | 8.0% | 0 | 0 | 1.3% | 0.5% | 0.6% | 0.5% |
| 15.5 | 6.0% | 28.3% | 55.9% | 8.4% | 0 | 0 | 0 | 0.8% | 0 | 0.6% |

471.95 g of the above solution (0.54 mol of phosphorus) was slowly mixed with an aqueous solution containing 59.98 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 72 g of white solid in a yield of 96%. A sample was dissolved in a sodium hydroxide aqueous solution. Phosphorus nuclear magnetic resonance was performed. From a phosphorus NMR spectrum, a sum of diethylphosphinate ions was 25.7 mol%, a sum of dipropylphosphinate ions was 9.1 mol%, and a sum of ethylpropylphosphinate ions and long-chain alkanediylphosphinate ions was 65.2mol%; and x=0.257, y=0.652, and z=0.091.

The sample was tested for a particle size, and D₅₀=62.31 µm.

An XRD measurement was performed on the sample. An interplanar spacing corresponding to the characteristic peak with a highest relative intensity determined by XRD was 10.350 Å (100%).

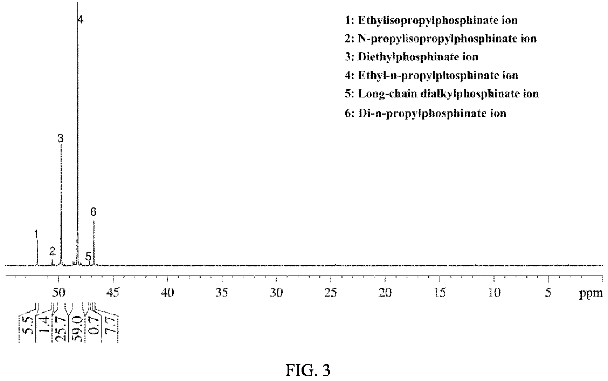

The hybrid salt obtained in the example was subjected to alkaline hydrolysis and then a nuclear magnetic resonance measurement. A ³¹P-nuclear magnetic resonance (NMR) spectrum is shown in FIG. 3. Peak areas of six peaks correspond to molar concentrations of six kinds of hypophosphite respectively. Therefore, the values of x, y, and z can be conveniently calculated by a ratio of the peak areas. The peak areas of the long-chain dialkylphosphinate ions and the ethylpropylphosphinate ions were combined for calculation.

### Example 8 Preparation of hybrid salt of Formula (I), where x=0.544, y=0.436, z=0.020, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with propylene until pressure no longer rose. A reaction solution was heated to about 90°C and a pressure gauge showed about 0.70 MPa. Then a sodium persulfate aqueous solution with a mass concentration of 4% was injected at a constant speed of 10 ml/h. The propylene was continuously introduced into the reaction kettle. The introduced amount of olefin was measured by a gas flow meter. After 5 hours, the flow of propylene was stopped. Ethylene was started to be introduced. The pressure was maintained to be 0.8 MPa. After 14.5 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR results are shown in Table 8.

**Table 8**

| Time (hour) | Double-addition product | | | | Mono-addition product | | | | Hypophosphite ion | Phosphite ion |
|---|---|---|---|---|---|---|---|---|---|---|
| | Double mixed 1 | Diethyl | Double mixed 2 | Dipropyl | Mono ethyl | Mono propyl 1 | Mono propyl 2 | Phosphonate | | |
| 5 | 0 | 0 | 0 | 0.8% | 0 | 3.3% | 31.9% | 0 | 63% | 0.9% |
| 11.5 | 3.8% | 52.5% | 36.0% | 2.4% | 0.2% | 0.1% | 1.4% | 0.5% | 2.3% | 0.8% |
| 14.5 | 3.5% | 54.8% | 38.2% | 2.3% | 0 | 0 | 0 | 0.6% | 0.1% | 0.5% |

458.58 g of the above solution (0.54 mol of phosphorus) was slowly mixed with an aqueous solution containing 59.98 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 56.3 g of white solid in a yield of 93%. A sample was dissolved in a sodium hydroxide aqueous solution. Phosphorus nuclear magnetic resonance was performed. From a phosphorus NMR spectrum, a sum of diethylphosphinate ions was 54.4mol%, a sum of dipropylphosphinate ions was 2.0mol%, and a sum of ethylpropylphosphinate ions was 43.6mol%; and x=0.544, y=0.436, and z=0.020.

The sample was tested for a particle size, and D₅₀=70.79 µm.

An XRD measurement was performed on the sample. An interplanar spacing corresponding to the characteristic peak with a highest relative intensity determined by XRD was 10.100 Å (100%).

### Example 9 Preparation of hybrid salt of Formula (I), where x=0.631, y=0.351, z=0.018, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with propylene until pressure no longer rose. A reaction solution was heated to about 90°C and a pressure gauge showed about 0.70 MPa. Then a sodium persulfate aqueous solution with a mass concentration of 4% was injected at a constant speed of 10 ml/h. The propylene was continuously introduced into the reaction kettle. The introduced amount of olefin was measured by a gas flow meter. After 3 hours, the flow of propylene was stopped. Ethylene was started to be introduced. The pressure was maintained to be 0.8 MPa. After 12 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR results are shown in Table 9.

**Table 9**

| Time (hour) | Double-addition product | | | | Mono-addition product | | | | Hypophosphite ion | Phosphite ion |
|---|---|---|---|---|---|---|---|---|---|---|
| | Double mixed 1 | Diethyl | Double mixed 2 | Dipropyl | Mono ethyl | Mono propyl 1 | Mono propyl 2 | Phosphonate | | |
| 3 | 0 | 0 | 0 | 0.8% | 0 | 2.6% | 26.2% | 0 | 69.7% | 0.7% |
| 8 | 3.0% | 61.4% | 29.1% | 1.5% | 1.4% | 0 | 1.2% | 0.3% | 1.5% | 0.6% |
| 12 | 3.2% | 63.5% | 30.4% | 1.7% | 0 | 0 | 0 | 0.6% | 0.1% | 0.5% |

376.79 g of the above solution (0.45 mol of phosphorus) was slowly mixed with an aqueous solution containing 49.98 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 56.3 g of white solid in a yield of 94%. A sample was dissolved in a sodium hydroxide aqueous solution. Phosphorus nuclear magnetic resonance was performed. From a phosphorus NMR spectrum, a sum of diethylphosphinate ions was 62.7 mol%, a sum of dipropylphosphinate ions was 1.7 mol%, a sum of ethylpropylphosphinate ions was 34.9 mol%, a sum of propyl phosphonate ions was 0.4 mol%, and a sum of the balance of other phosphorus impurities was 0.3 mol%. After normalization, x=0.631, y=0.351, and z=0.018.

The sample was tested for a particle size, and D₅₀=79.96 µm.

An XRD measurement was performed on the sample. An interplanar spacing corresponding to the characteristic peak with a highest relative intensity determined by XRD was 9.9988 Å (100%).

### Example 10 Preparation of hybrid salt of Formula (I), where x=0.764, y=0.231, z=0.005, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with propylene until pressure no longer rose. A reaction solution was heated to about 90°C and a pressure gauge showed about 0.50 MPa. Then a sodium persulfate aqueous solution with a mass concentration of 4% was injected at a constant speed of 10 ml/h. The propylene was continuously introduced into the reaction kettle. The introduced amount of olefin was measured by a gas flow meter. After 3 hours, the flow of propylene was stopped. Ethylene was started to be introduced. The pressure was maintained to be 0.8 MPa. After 13.5 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR results are shown in Table 10.

**Table 10**

| Time (hour) | Double-addition product | | | | Mono-addition product | | | | Hypophosphite ion | Phosphite ion |
|---|---|---|---|---|---|---|---|---|---|---|
| | Double mixed 1 | Diethyl | Double mixed 2 | Dipropyl | Mono ethyl | Mono propyl 1 | Mono propyl 2 | Phosphonate | | |
| 3 | 0 | 0 | 0 | 0 | 0 | 1.4% | 14.9% | 0 | 83.1% | 0.6% |
| 11.5 | 1.9% | 74.3% | 19.9% | 0.5% | 0 | 0 | 0.4% | 0.5% | 2.0% | 0.5% |
| 13.5 | 1.8% | 75.9% | 20.3% | 0.8% | 0 | 0 | 0 | 0.7% | 0 | 0.5% |

449.42 g of the above solution (0.54 mol of phosphorus) was slowly mixed with an aqueous solution containing 59.98 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 68.1 g of white solid in a yield of 96%. A sample was dissolved in a sodium hydroxide aqueous solution. Phosphorus nuclear magnetic resonance was performed. From a phosphorus NMR spectrum, a sum of diethylphosphinate ions was 76.4 mol%, a sum of dipropylphosphinate ions was 0.5 mol%, and a sum of ethylpropylphosphinate ions was 23.1 mol%; and x=0.764, y=0.231, and z=0.005.

The sample was tested for a particle size, and D₅₀=69.99 µm.

An XRD measurement was performed on the sample. An interplanar spacing corresponding to the characteristic peak with a highest relative intensity determined by XRD was 9.8537 Å (100%).

### Example 11 (comparative example) Preparation of hybrid salt of Formula (I), where x=0.902, y=0.096, z=0.002, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with ethylene until pressure was 0.8 MPa. A reaction solution was heated to about 90°C. Then a sodium persulfate aqueous solution with a mass concentration of 4% was injected at a constant speed of 10 ml/h. The ethylene was continuously introduced into the reaction kettle. The introduced amount of olefin was measured by a gas flow meter. After 4.5 hours, the flow of ethylene was stopped. Propylene was started to be introduced. The pressure was maintained to be about 0.8 MPa. After 10.5 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR results are shown in Table 11.

**Table 11**

| Time (hour) | Double-addition product | | | | Mono-addition product | | | | Hypophosphite ion | Phosphite ion |
|---|---|---|---|---|---|---|---|---|---|---|
| | Double mixed 1 | Diethyl | Double mixed 2 | Dipropyl | Mono ethyl | Mono propyl 1 | Mono propyl 2 | Phosphonate | | |
| 4 | 0 | 77.4% | 0 | 0 | 21.6% | 0 | 0 | 0.1% | 0.3% | 0.6% |
| 10.5 | 0.7% | 87.8% | 10.1% | 0.2% | 0.1% | 0 | 0 | 0.6% | 0 | 0.5% |

759.4 g of the above solution (0.93 mol of phosphorus) was slowly mixed with an aqueous solution containing 103.29 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 116.6 g of white solid in a yield of 97%. A sample was dissolved in a sodium hydroxide aqueous solution. Phosphorus nuclear magnetic resonance was performed. From a phosphorus NMR spectrum, a sum of diethylphosphinate ions was 90.2 mol%, a sum of dipropylphosphinate ions was 0.2 mol%, and a sum of ethylpropylphosphinate ions was 9.6 mol%; and x=0.902, y=0.096, and z=0.002.

The sample was tested for a particle size, and D₅₀=80.56 µm.

An XRD measurement was performed on the sample. An interplanar spacing corresponding to the characteristic peak with a highest relative intensity determined by XRD was 9.7317 Å (100%).

### Example 12 (comparative example) Preparation of hybrid salt of Formula (I), where x=0.969, y=0.031, z=0, M=Al, n=3

100 g of sodium hypophosphite monohydrate was dissolved in 500 g of water, and was put into a 1 L stainless steel pressure reaction kettle. The reaction kettle was purged by nitrogen twice, vacuumized, and subsequently filled with ethylene until pressure was 0.8 MPa. A reaction solution was heated to about 90°C. Then a sodium persulfate aqueous solution with a mass concentration of 4% was injected at a constant speed of 10 ml/h. The ethylene was continuously introduced into the reaction kettle. The introduced amount of olefin was measured by a gas flow meter. After 6.5 hours, the flow of ethylene was stopped. Propylene was started to be introduced. The pressure was maintained to be about 0.8 MPa. After 9.5 hours, pressure of the reaction kettle did not drop. A colorless transparent reaction solution was obtained by cooling and releasing pressure, N₂ purging and discharging.

Samples were taken during the reaction, and nuclear magnetic resonance was performed. ³¹P-NMR results are shown in Table 12.

**Table 12**

| Time (hour) | Double-addition product | | | | Mono-addition product | | | | Hypophosphite ion | Phosphite ion |
|---|---|---|---|---|---|---|---|---|---|---|
| | Double mixed 1 | Diethyl | Double mixed 2 | Dipropyl | Mono ethyl | Mono propyl 1 | Mono propyl 2 | Phosphonate | | |
| 6.5 | 0 | 96.0% | 0 | 0 | 3.5% | 0 | 0 | 0.2% | 0 | 0.3% |
| 9.5 | 0 | 94.9% | 3.2% | 0 | 0.5% | 0 | 0 | 0.7% | 0 | 0.7% |

751.4 g of the above solution (0.93 mol of phosphorus) was slowly mixed with an aqueous solution containing 103.29 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed while hot. A filter cake was washed with water to pH>4.5. The filter cake was dried at 120°C to obtain 115.2 g of white solid in a yield of 97%. A small part of the white solid was dissolved in a sodium hydroxide aqueous solution. Phosphorus nuclear magnetic resonance was performed. From a phosphorus NMR spectrum, a sum of diethylphosphinate ions was 96.3 mol%, a sum of dipropylphosphinate ions was 0 mol%, a sum of ethylpropylphosphinate ions was 3.1 mol%, and a sum of propylphosphonate ions was 0.6 mol%. After normalization, x=0.969, y=0.031, and z=0.

The sample was tested for a particle size, and D₅₀=76.33 µm.

An XRD measurement was performed on the sample. An interplanar spacing corresponding to the characteristic peak with a highest relative intensity determined by XRD was 9.6702 Å (100%).

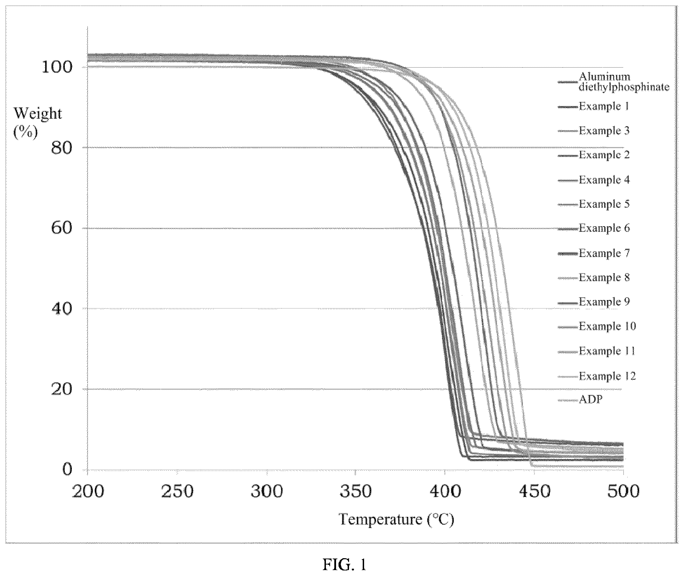

The hybrid dialkylphosphinate salts obtained in Examples 1-12, aluminum dipropylphosphinate and ADP were subjected to thermogravimetric analysis (TGA) tests. Results are shown in FIG. 1. FIG. 1 shows TGA curves of the hybrid salts with different values of x, y and z, the ADP and the aluminum dipropylphosphinate. It can be seen from the figure that the greater the value of z is, the lower thermal stability the hybrid salt has. The greater the x is, the higher the thermal stability of the salt is.

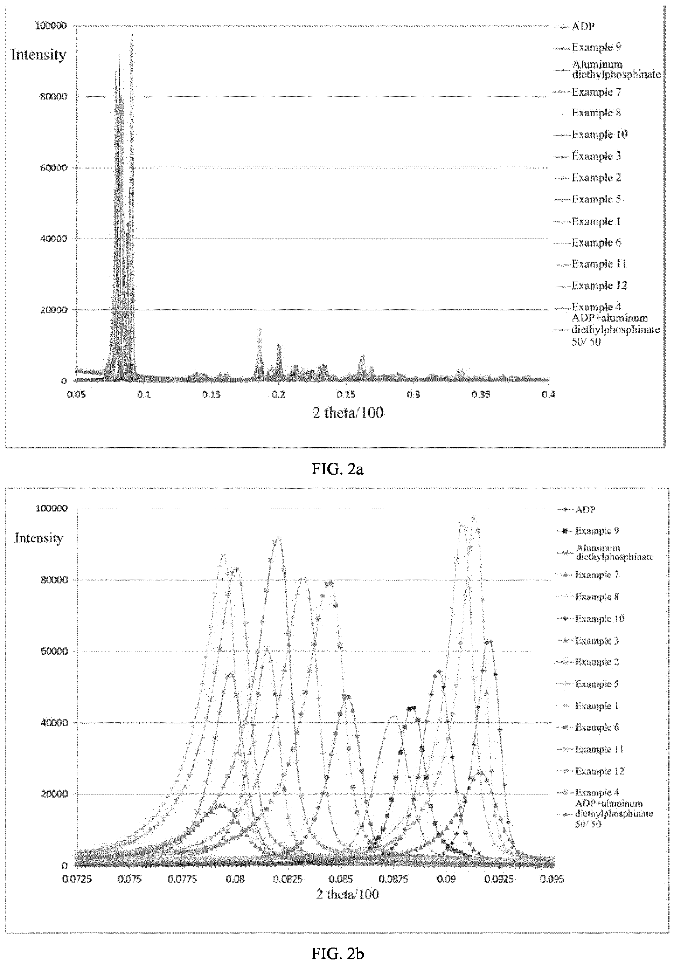

FIG. 2a shows an XRD graph of hybrid dialkylphosphinate salts obtained in Examples 1-12, aluminum dipropylphosphinate, ADP and a physical mixed salt of aluminum dipropylphosphinate and ADP. It can be seen from FIG. 2b that a simple physical mixed salt has two independent peaks in a strongest absorption peak region in the XRD spectrum, d values of the two peaks are close to d values of aluminum diethylphosphinate and aluminum dipropylphosphinate respectively. The hybrid salts of Formula (I) have only one peak or overlapping peaks, and d values basically fall between the d values of the aluminum diethylphosphinate and the aluminum dipropylphosphinate. What described above indicates that the hybrid dialkylphosphinate salt of Formula (I) according to the present disclosure is not a simple mixture of aluminum diethylphosphinate, aluminum ethylpropylphosphinate and aluminum dipropylphosphinate, but is a hybrid salt contains a structure in which at least two of diethylphosphinate, ethylpropylphosphinate and dipropylphosphinate are coordinated with a same aluminum atom.

### Example 13

Polyamide PA66, the hybrid salt prepared in Example 1, and a composite antioxidant were mixed in an internal mixer at 50 rpm/min in a weight ratio of 79.6: 20: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 V-1 at 1.6 mm thickness.

### Example 14

Polyamide PA6, the hybrid salt prepared in Example 1, and a composite antioxidant were mixed in an internal mixer at 50 rpm/min in a weight ratio of 79.6: 20: 0.4 at 260°C. A mixing time was 5 minutes. After that, the mixture was taken out for cooling and drying. Then the mixture filled a mold and was preheated in a flat vulcanizing press at 260°C for 10 minutes followed by pressing at 10 MPa for 5 minutes. Cold pressing was performed. The sample plaque was cut and tested after cooling. A flame retardant rating of the sample was UL94 V-1 at 1.6 mm thickness.

### Example 15-51

The hybrid salts prepared in Examples 1-10 were prepared and tested in polyamide PA66 and PA6 separately in manners described in Examples 13 and 14. Results are shown in Tables 14, 15 and 16.

### Comparative example 1 Aluminum dipropylphosphinate

100 g of sodium hypophosphite monohydrate was dissolved in 500 g of water, and was put into a 1 L stainless steel pressure reaction kettle. The reaction kettle was purged by nitrogen twice, vacuumized, and subsequently filled with propylene until pressure no longer rose. A reaction solution was heated to about 90°C and a pressure gauge showed 0.8 MPa. Then a sodium persulfate aqueous solution with a mass concentration of 4% was injected at a constant speed of 10 ml/h. The propylene was continuously introduced into the reaction kettle. The introduced amount of the propylene was measured by a gas flow meter. After 15.5 hours, pressure of the reaction kettle did not drop. The reaction stopped. A transparent reaction solution was obtained by cooling and releasing pressure, N₂ purging and discharging.

Samples were taken during the reaction, and nuclear magnetic resonance was performed. ³¹P-NMR results are shown in Table 13.

**Table 13**

| Reaction time (hour) | Double-addition product | | | Mono-addition product | | | Hypophosphite ion | Phosphite ion |
|---|---|---|---|---|---|---|---|---|
| | Di-isopropylphosphinate ion | N-propylisopropylphosphinate ion | Di-n-propylphosphinate ion | Isopropylphosphinate ion | N-propylphosphinate ion | Propylphosphinate ion | | |
| 7.5 | 0.2% | 12.3% | 71.2% | 1.2% | 14.5% | 0.3% | 0 | 0.3% |
| 12 | 0.6% | 14.3% | 80.5% | 0.3% | 2.8% | 0.8% | 0 | 0.7% |
| 15 | 0.6% | 14.5% | 81.7% | 0 | 1.5% | 1.0% | 0 | 0.7% |

525 g of the above solution (0.6 mol of phosphorus) was slowly mixed with an aqueous solution containing 66.64 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed slowly while hot. A filter cake was washed with water to pH>4.5. The filter cake was dried at 120°C to obtain 92.8 g of white solid in a yield of 98%.

The sample was tested for a particle size, and D₅₀=5.21 µm.

An XRD measurement was performed on the sample. An interplanar spacing corresponding to the characteristic peak with a highest relative intensity determined by XRD was 11.079 Å (100%).

### Comparative example 2 Aluminum diethylphosphinate

100 g of sodium hypophosphite monohydrate was dissolved in 500 g of water, and was put into a 1 L stainless steel pressure reaction kettle. The reaction kettle was purged by nitrogen twice, vacuumized, and subsequently filled with ethylene until pressure was 0.8 MPa. A reaction solution was heated to about 90°C. Then a sodium persulfate aqueous solution with a mass concentration of 4% was injected at a constant speed of 10 ml/h. The ethylene was continuously introduced into the reaction kettle. The introduced amount of the ethylene was measured by a gas flow meter. After 8 hours, pressure of the system did not drop. Reaction stops. A transparent reaction solution was obtained by cooling and releasing pressure, N₂ purging and discharging. Samples were taken after the reaction ends, and nuclear magnetic resonance was performed. ³¹P-NMR results are shown.

190 g of the above solution (0.24 mol of phosphorus) was slowly mixed with an aqueous solution containing 26.66 g of aluminum sulfate octadecahydrate with a mass concentration of 10%. Reaction temperature was controlled to 70°C, and a pH value was adjusted to be less than or equal to 3.0. A large amount of precipitation was obtained. After addition and mixing were completed, the temperature was maintained for 0.5 hour. Filtering was performed slowly while hot. A filter cake was washed with water to pH>4.5. The filter cake was dried at 120°C to obtain 29.8 g of white solid in a yield of 95.4%.

The sample was tested for a particle size, and D₅₀=29.5 µm.

### Comparative example 3

Polyamide PA66, the aluminum dipropylphosphinate prepared in Comparative example 1, and a composite antioxidant were mixed in an internal mixer at 50 rpm/min in a weight ratio of 84.6: 15: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 V-0 at 1.6 mm thickness.

### Comparative example 4

Polyamide PA66, the aluminum dipropylphosphinate prepared in Comparative example 1, and a composite antioxidant were mixed in an internal mixer at 50 rpm/min in a weight ratio of 87.1: 12.5: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 V-0 at 1.6 mm thickness.

### Comparative example 5

Polyamide PA66, the aluminum dipropylphosphinate prepared in Comparative example 1, and a composite antioxidant were mixed in an internal mixer at 50 rpm/min in a weight ratio of 89.6: 10: 0.4 at280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 V-1 at 1.6 mm thickness.

### Comparative example 6

Polyamide PA6, the aluminum dipropylphosphinate prepared in Comparative example 1, and a composite antioxidant were mixed in an internal mixer at 50 rpm/min in a weight ratio of 84.6: 15: 0.4 at 260°C. A mixing time was 5 minutes. After that, the mixture was taken out for cooling and drying. Then the mixture filled a mold and was preheated in a flat vulcanizing press at 260°C for 10 minutes followed by pressing at 10 MPa for 5 minutes. Cold pressing was performed. The sample plaque was cut and tested after cooling. A flame retardant rating of the sample was UL-94 V-1 at 1.6 mm thickness.

### Comparative example 7

Polyamide PA66, the aluminum diethylphosphinate prepared in Comparative example 2, and a composite antioxidant were mixed in an internal mixer at 50 rpm/min in a weight ratio of 84.6: 15: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 no grade at 1.6 mm thickness.

### Comparative example 8

Polyamide PA6, the aluminum diethylphosphinate prepared in Comparative example 2, and a composite antioxidant were mixed in an internal mixer at 50 rpm/min in a weight ratio of 84.6: 15: 0.4 at 260°C. A mixing time was 5 minutes. After that, the mixture was taken out for cooling and drying. The mixture filled a mold and was preheated in a flat vulcanizing press at 260°C for 10 minutes followed by pressing at 10 MPa for 5 minutes. Cold pressing was performed. The sample plaque was cut and tested after cooling. A flame retardant rating of the sample was UL-94 no grade at 1.6 mm thickness.

### Comparative example 9

Polyamide PA66, ADP, and a composite antioxidant were mixed in an internal mixer at 50 rpm/min in a weight ratio of 84.6: 15: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 no grade at 1.6 mm thickness.

### Comparative example 10

Polyamide PA6, ADP, and a composite antioxidant were mixed in an internal mixer at 50 rpm/min in a weight ratio of 84.6: 15: 0.4 at260°C. A mixing time was 5 minutes. After that, the mixture was taken out for cooling and drying. Then the mixture filled a mold and was preheated in a flat vulcanizing press at 260°C for 10 minutes followed by pressing at 10 MPa for 5 minutes. Cold pressing was performed. The sample plaque was cut and tested after cooling. A flame retardant rating of the sample was UL-94 no grade at 1.6 mm thickness.

### Comparative example 11

Polyamide PA66, the hybrid salt prepared in Example 11, and a composite antioxidant were mixed in an internal mixer at 50 rpm/min in a weight ratio of 84.6: 15: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 no grade at 1.6 mm thickness.

### Comparative example 12

Polyamide PA6, the hybrid salt prepared in Example 11, and a composite antioxidant were mixed in an internal mixer at 50 rpm/min in a weight ratio of 84.6: 15: 0.4 at 260°C. A mixing time was 5 minutes. After that, the mixture was taken out for cooling and drying. Then the mixture filled a mold and was preheated in a flat vulcanizing press at 260°C for 10 minutes followed by pressing at 10 MPa for 5 minutes. Cold pressing was performed. The sample plaque was cut and tested after cooling. A flame retardant rating of the sample was UL-94 no grade at 1.6 mm thickness.

Polyamide PA66, the hybrid salt prepared in Example 12, and a composite antioxidant were mixed in an internal mixer at 50 rpm/min in a weight ratio of 84.6: 15: 0.4 at 280°C. A mixing time was 5 minutes. After that, the mixture was taken out for cooling and drying. Then the mixture filled a mold and was preheated in a flat vulcanizing press at 280°C for 10 minutes followed by pressing at 10 MPa for 5 minutes. Cold pressing was performed. The sample plaque was cut and tested after cooling. A flame retardant rating of the sample was UL94 no grade at 1.6 mm thickness.

### Comparative example 14

Polyamide PA6, the hybrid salt prepared in Example 12, and a composite antioxidant were mixed in an internal mixer at 50 rpm/min in a weight ratio of 84.6: 15: 0.4 at 260°C. A mixing time was 5 minutes. After that, the mixture was taken out for cooling and drying. Then the mixture filled a mold and was preheated in a flat vulcanizing press at 260°C for 10 minutes followed by pressing at 10 MPa for 5 minutes. Cold pressing was performed. The sample plaque was cut and tested after cooling. A flame retardant rating of the sample was UL-94 no grade at 1.6 mm thickness.

Test results of Comparative examples 3-14 are shown in Table 17.

**Table 14 Formulations and test results of Examples 15-30**

| | Example 15 | Example 16 | Example 17 | Example 18 | Example 19 | Example 20 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|---|---|---|
| PA66 | 84.6 | 87.1 | | | 84.6 | 87.1 | 89.6 | | | 84.6 | 87.1 | 89.6 | | | 87.1 | 89.6 |
| PA6 | | | 84.6 | 87.1 | | | | 84.6 | 87.1 | | | | 84.6 | 87.1 | | |

| Flame retardant | Example 1 | Example 1 | Example 1 | Example 1 | Example 2 | Example 2 | Example 2 | Example 2 | Example 2 | Example 3 | Example 3 | Example 3 | Example 3 | Example 3 | Example 4 | Example 4 |
|---|---|---|---|---|---|---|---|---|---|---|---|---|---|---|---|---|
| Flame retardant part | 15 | 12.5 | 15 | 12.5 | 15 | 12.5 | 10 | 15 | 12.5 | 15 | 12.5 | 10 | 15 | 12.5 | 12.5 | 10 |
| Composite antioxidant | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| UL-94 | V-0 | V-1 | V-0 | V-1 | V-0 | V-0 | V-0 | V-0 | V-1 | V-0 | V-0 | V-1 | V-0 | V-1 | V-0 | V-0 |

**Table 15 Formulations and test results of Examples 31-45**

| | Example 31 | Example 32 | Example 33 | Example 34 | Example 35 | Example 36 | Example 37 | Example 38 | Example 39 | Example 40 | Example 41 | Example 42 | Example 43 | Example 44 | Example 45 |
|---|---|---|---|---|---|---|---|---|---|---|---|---|---|---|---|
| PA66 | | 84.6 | 87.1 | 89.6 | | | | 84.6 | 87.1 | | | 84.6 | 87.1 | | |
| PA6 | 84.6 | | | | 84.6 | 87.1 | 89.6 | | | 84.6 | 87.1 | | | 84.6 | 87.1 |

| Flame retardant | Example 4 | Example 5 | Example 5 | Example 5 | Example 5 | Example 5 | Example 5 | Example 6 | Example 6 | Example 6 | Example 6 | Example 7 | Example 7 | Example 7 | Example 7 |
|---|---|---|---|---|---|---|---|---|---|---|---|---|---|---|---|
| Flame retardant part | 15 | 15 | 12.5 | 10 | 15 | 12.5 | 10 | 15 | 12.5 | 15 | 12.5 | 15 | 12.5 | 15 | 12.5 |
| Composite antioxidant | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| UL-94 | V-0 | V-0 | V-0 | V-0 | V-0 | V-0 | V-0 | V-0 | V-1 | V-0 | V-1 | V-0 | V-0 | V-0 | V-0 |

**Table 16 Formulations and test results of Examples 46-51**

| | Example 46 | Example 47 | Example 48 | Example 49 | Example 50 | Example 51 |
|---|---|---|---|---|---|---|
| PA66 | 84.6 | | 79.6 | | 84.6 | |
| PA6 | | 84.6 | | 79.6 | | 84.6 |

| Flame retardant | Example 8 | Example 8 | Example 9 | Example 9 | Example 10 | Example 10 |
|---|---|---|---|---|---|---|
| Flame retardant part | 15 | 15 | 20 | 20 | 15 | 15 |
| Composite antioxidant | 0.4 | 0.4 | 0.4 | 0.4 | 0.4 | 0.4 |
| UL-94 | V-1 | V-0 | V-0 | V-0 | V-0 | V-1 |

**Table 17 Formulations and test results of Comparative examples 3-14**

| | Comparative example 3 | Comparative example 4 | Comparative example 5 | Comparative example 6 | Comparative example 7 | Comparative example 8 | Comparative example 9 | Comparative example 10 | Comparative example 11 | Comparative example 12 | Comparative example 13 | Comparative example 14 |
|---|---|---|---|---|---|---|---|---|---|---|---|---|
| PA66 | 84.6 | 87.1 | 89.6 | | 84.6 | | 84.6 | | 84.6 | | 84.6 | |
| PA6 | | | | 84.6 | | 84.6 | | 84.6 | | 84.6 | | 84.6 |

| Flame retardant | Comparative example 1 | Comparative example 1 | Comparative example 1 | Comparative example 1 | Comparative example 2 | Comparative example 2 | ADP | ADP | Example 11 | Example 11 | Example 12 | Example 12 |
|---|---|---|---|---|---|---|---|---|---|---|---|---|
| Flame retardant part | 15 | 12.5 | 10 | 15 | 15 | 15 | | | 15 | 15 | 15 | 15 |
| ADP | | | | | | | 15 | 15 | | | | |
| Composite antioxidant | 0.4 | 0.4 | 0.4 | 0.4 | 0.4 | 0.4 | 0.4 | 0.4 | 0.4 | 0.4 | 0.4 | 0.4 |
| UL-94 | V-0 | V-0 | V-1 | V-1 | NG | NG | NG | NG | NG | NG | NG | NG |

| | | | | | | | | | | | | |
|---|---|---|---|---|---|---|---|---|---|---|---|---|
| *: NG No grade | | | | | | | | | | | | |

Examples 15-51 illustrate that a flame retardant including the hybrid dialkylphosphinate salt of the present disclosure has outstanding flame retardant efficiency for polyamide. No obvious dust was observed during preparation of flame retardant polyamide. The flame retardant PA66 samples prepared have desirable toughness and no obvious degradation. The comparative examples show that under the same conditions, the particle sizes of the obtained aluminum dipropylphosphinate and aluminum diethylphosphinate are smaller than those of the hybrid salts, and the large particle sizes of the hybrid salts are unexpected. Comparative examples 3-6 show that the dipropylphosphinate has certain flame retardancy, but its flame retardant efficiency for polyamide is not as good as that of the hybrid salts of Formula (I) according to the present disclosure, which is seen in Examples 17, 21, 22, 27, 30, 31, 34, 35, 40, 44 and 47. Moreover, when flame retardant polyamide is prepared, it is observed that dipropylphosphinate has much dust, resulting in poor operating environment. Furthermore, it can be seen from FIG. 1 that the thermal stability of dipropylphosphinate is too low, and also flame retardant PA66 containing dipropylphosphinate is brittle, indicating serious degradation. Comparative examples 7-10 illustrates that pure aluminum diethylphosphinate has low flame retardant efficiency for polyamide. Comparative examples 11-14 illustrate that when a ratio of diethylphosphinate in the hybrid salts of Formula (I) is too high, that is, x>0.8, the flame retardant efficiency of the hybrid salts for polyamide decreases.

The foregoing descriptions are merely some examples of the present disclosure, and are not intended to limit the present disclosure in any form. Although the present disclosure has been disclosed as above by means of the preferred examples, these examples are not for limiting the present disclosure. Those skilled in the art can make certain alterations or modifications by using the technical contents disclosed above without departing from the scope of the technical solutions of the present disclosure, so as to arrive at equivalent examples, which fall within the scope of the technical solutions.

## Claims

1. A hybrid dialkylphosphinate salt, selected from at least one of the compounds represented by Formula (I): 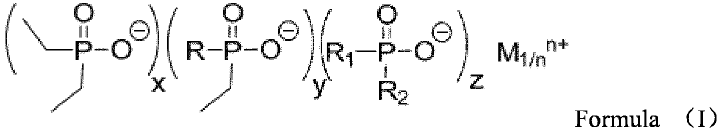
wherein M is a central atom; R, R₁ and R₂ are independently selected from any one of n-propyl and isopropyl; a diethylphosphinate ion, an ethylpropylphosphinate ion and a dipropylphosphinate ion are ligands; at least two of the diethylphosphinate ion, the ethylpropylphosphinate ion and the dipropylphosphinate ion are paired with a same metal atom, and one of the ligands is the ethylpropylphosphinate ion;
the M is selected from metal elements; the metal element is selected from at least one of group IIA, IIIA, IVA and VA metal elements, a transition metal element and a lanthanide metal element;
n is a valence state of the metal M; n is selected from 2, 3 or 4;
0≤x≤0.80; 0.05≤y≤0.7; and 0≤z≤0.95, and x+y+z=1.

2. The hybrid dialkylphosphinate salt according to claim 1, wherein the group IIA metal element is selected from at least one of Be, Mg, Ca, Sr and Ba;
the group IIIA metal element is Al;
the group IVA metal element is Sn;
the group VA metal element is Sb;
the transition metal element is selected from at least one of Fe, Zn, Cu, Ti, Zr and Mn; and
the lanthanide metal element is Ce.

3. The hybrid dialkylphosphinate salt according to claim 1, wherein 0≤x≤0.80, 0.05≤y≤0.70, and 0.005≤z≤0.92;
preferably, 0≤x≤0.66; 0.30≤y≤0.70; and 0.01≤z≤0.60; and
preferably, 0≤x≤0.30; 0.35≤y < 0.70; and 0.05≤z≤0.60.

4. The hybrid dialkylphosphinate salt according to claim 1, wherein M=Al, and n=3.

5. A method for preparing the hybrid dialkylphosphinate salt according to any one of claims 1-4, comprising:
causing reaction I on a material comprising a mixture A and a metal element M source in an aqueous phase, and obtaining the hybrid dialkylphosphinate salt; wherein
the mixture A comprises diethylphosphinic acid and/or an alkali metal salt of the diethylphosphinic acid, ethylpropylphosphinic acid and/or an alkali metal salt of the ethylpropylphosphinic acid, and dipropylphosphinic acid and/or an alkali metal salt of the dipropylphosphinic acid.

6. The method according to claim 5, wherein obtaining of the mixture A comprises:
introducing ethylene and propylene into an aqueous solution comprising phosphinic acid and/or an alkali metal salt of the phosphinic acid, and a radical initiator for reaction II, and obtaining the mixture A;
preferably, mass of water in the aqueous solution is 10%-99% of total mass of the aqueous solution;
preferably, the reaction II is carried out at conditions of temperature of 0°C-250°C, time of 0.01 h-50 h, and pressure of 0 MPa-3 MPa;
preferably, a molar ratio of the radical initiator to the phosphinic acid and/or the alkali metal salt of the phosphinic acid is 0.001-0.1: 1;
preferably, a molar ratio of the phosphinic acid and/or the alkali metal salt of the phosphinic acid to the ethylene to the propylene is 1: 0.05-1.8: 0.2-1.95;
preferably, obtaining of the mixture A comprises:
introducing the propylene into an aqueous solution comprising phosphinic acid and/or an alkali metal salt of the phosphinic acid and a radical initiator for reaction, after a molar ratio of the introduced propylene to total phosphorus of the phosphinic acid and/or the alkali metal salt of the phosphinic acid reaches (y+2z)/1 in Formula (I), stopping introducing the propylene, then introducing the ethylene for reaction, and obtaining the mixture A;
preferably, obtaining of the mixture A comprises:
introducing the propylene and portion of the ethylene into an aqueous solution comprising phosphinic acid and/or an alkali metal salt of the phosphinic acid and a radical initiator for reaction, wherein a molar ratio of the ethylene to total phosphorus of the phosphinic acid and/or the alkali metal salt of the phosphinic acid is less than (2x+y)/1 in Formula (I), after a molar ratio of the introduced propylene to the total phosphorus of the phosphinic acid and/or the alkali metal salt of the phosphinic acid reaches (y+2z)/1 in Formula (I), stopping introducing the propylene, then introducing the remaining ethylene for reaction, and obtaining the mixture A;
preferably, obtaining of the mixture A comprises:
introducing portion of the ethylene into an aqueous solution comprising phosphinic acid and/or an alkali metal salt of the phosphinic acid and a radical initiator, wherein a molar ratio of the portion of the ethylene to total phosphorus of the phosphinic acid and/or the alkali metal salt of the phosphinic acid is less than (2x+y)/1 in Formula (I), after the portion of the ethylene completely reacts, introducing the propylene for reaction, after a molar ratio of the introduced propylene to the total phosphorus of the phosphinic acid and/or the alkali metal salt of the phosphinic acid reaches (y+2z)/1 in Formula (I), stopping introducing the propylene, then introducing the remaining ethylene for reaction, and obtaining the mixture A;
preferably, a metal element M source is selected from at least one of metal element M salts; and
preferably, the metal element M salt is selected from at least one of nitrate, sulfate, hydrochloride, acetate and oxide of the metal element M.

7. A flame retardant, selected from at least one of the hybrid dialkylphosphinate salt according to any one of claims 1-4 and the hybrid dialkylphosphinate salt prepared through the method according to any one of claims 5 or 6.

8. A flame retardant material, comprising a flame retardant P and a thermoplastic polymer, wherein
the flame retardant P is selected from at least one of the flame retardants according to claim 7.

9. The flame retardant material according to claim 8, wherein a mass percent of the flame retardant P in the flame retardant material is 1%-35%.

10. The flame retardant material according to claim 8, further comprising a functional additive, wherein
the functional additive is selected from at least one of a reinforcing agent, an anti-dripping agent, a stabilizer, a pigment, a dye, a charring catalyst, a dispersant, a nucleating agent, an inorganic filler and an antioxidant; and
preferably, a mass percent of the functional additive in the flame retardant material is 5%-40%.

11. The flame retardant material according to claim 10, further comprising a flame retardant Q, wherein
the flame retardant Q is selected from at least one of a nitrogen flame retardant and a boron flame retardant.

12. The flame retardant material according to claim 11, wherein a mass percent of the flame retardant Q in the flame retardant material is 0.5%-20%.

13. The flame retardant material according to claim 8, wherein the thermoplastic polymer is selected from at least one of polyamide and polyester.
